Europäisches Patentamt

European Patent Office

Office européen des brevets

(19)

(11) **EP 1 363 140 A1**

(12) ## EUROPEAN PATENT APPLICATION

(43) Date of publication:
**19.11.2003 Bulletin 2003/47**

(51) Int Cl.$^7$: **G01V 8/20**

(21) Application number: **03076482.3**

(22) Date of filing: **13.05.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **13.05.2002 BE 200200317**

(71) Applicant: **Joval N.V.**
**8500 Kortrijk (BE)**

(72) Inventor: **Versavel, Jo**
**8500 Kortrijk (BE)**

(74) Representative: **Quintelier, Claude et al**
**Gevers & Vander Haeghen**
**Holidaystraat 5**
**1831 Diegem (BE)**

Remarks:
A request for correction ...... has been filed pursuant to Rule 88 EPC. A decision on the request will be taken during the proceedings before the Examining Division (Guidelines for Examination in the EPO, A-V, 3.).

(54) **Method and device for detecting the presence of an object on a runway**

(57) Method and device for detecting the presence of an object on a runway, in the case of which stereovision pictures between a first and a second camera are used to detect an object. When an object is detected, the distance between the object and a position along the edge is determined, in order to determine on the basis of that distance whether the object is actually lying on the runway. If the object is lying on the runway, the size of the object is also determined.

*Fig. 1*

EP 1 363 140 A1

**Description**

The invention relates to a method for detecting the presence of an object on a runway.

In order to make safe landing and takeoff of aircraft possible, it is important for the runway to be checked for the presence of objects. It can, in fact, happen that objects are blown by the wind onto the runway, or even that aircraft taking off or landing lose a part, which then falls onto the runway. The presence of objects on the runway can seriously obstruct the takeoff and landing of aircraft, and may even cause damage to the aircraft, which can seriously endanger the lives of the passengers during the remainder of the flight.

The most common way of detecting the presence of objects is simply to arrange for a person to travel over the runway in a vehicle, in order to inspect the runway. The use of radar detectors is also known, but these detectors are not sufficiently reliable. It is, however, important that rapid action should be taken when an object falls onto the runway, such action preferably being taken before an aircraft lands or takes off.

A disadvantage of the known method is that it is time-consuming and labour-intensive. The person concerned has to be sent onto the runway regularly, while the chance of anything lying on the runway is fortunately slight. However, the safety of passengers and of the crew necessitates a regular and frequent check.

The object of the invention is to achieve a method and a device that make a regular and frequent check of the runway possible, without a person being sent out continually.

To that end, a method according to the invention is characterised in that it comprises the following steps:

- recording of a first picture by at least a first camera set up on the edge of the runway;
- recording of a second picture by at least a second camera set up on the same edge of the runway, the second camera being set up at a distance (d) from the first camera, in order to form a stereovision image between first and second camera;
- ascertaining whether an object is recognisable in the first and second picture;
- if an object is recognised, determining the distance between the object and a position along the edge by means of a first and second angle between the recognised object and the first and second camera respectively;
- ascertaining, on the basis of said distance, whether the recognised object is on the runway and determining the size of the object, if it is established that the detected object is on the runway, by scanning within one of the first or second pictures of the recognised object.

Recording stereovision images formed by the first and second picture means that it is possible in a relatively simple - and above all reliable - way, on the one hand, to establish whether an object is visible in both pictures and, on the other hand, to determine by means of simple trigonometry the distance of the object from the cameras. It can then be worked out from this distance whether the object is lying on or next to the runway. If the object is lying on the runway, the dimensions of the object are determined, which makes it possible to distinguish whether it is actually a question of an object, or whether it is a shadow. If it is in fact found that there is an object on the runway, the alarm can quickly be raised and action can be taken. Using cameras means that permanent monitoring can be set up, with the result that safety is considerably improved.

A first preferred embodiment of a method according to the invention is characterised in that during the said scanning the contours of the detected object in the picture are scanned widthwise, on the one hand, and vertically, on the other hand. The size of the object concerned can therefore be determined in a simple and reliable manner.

The invention will now be explained in greater detail with reference to the example shown in the drawing, in which :

Figures 1 a) and b) show a top and front view of a device according to the invention, which is set up alongside a runway;
Figure 2 shows a top view of the device according to the invention, with an object outside the runway; and
Figure 3 shows how the contours of the object are determined.

The same reference numeral is given to an identical or similar element in the drawing.

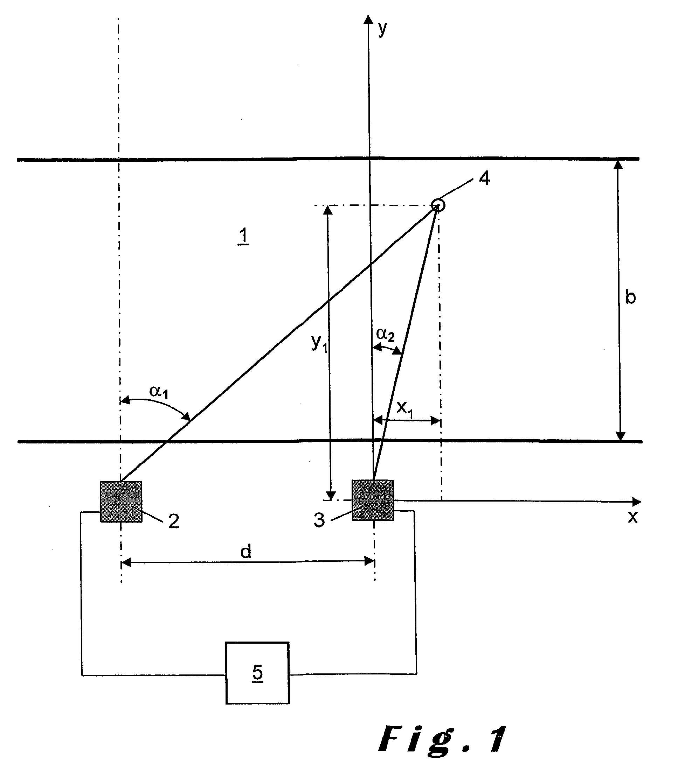

Figure 1 a) illustrates a runway 1, alongside which a first camera 2 and a second 3 camera have been set up. For the sake of simplicity, only two cameras are shown, but, given the length of runways, it will be clear that several systems of a first and a second camera will each time be set up alongside the runway, in order to monitor the entire runway. The various systems are, for example, situated each time at a distance of between 50 and 100 m from each other, depending on the total angle of incidence of the camera.

The first camera 2 and the second camera 3 are set up at a distance d, measured in the longitudinal direction of the runway 1, from each other. This distance lies, for example, between 25 and 100 cm. The cameras are also set up at a certain height relative to the surface of the ground, for example 20 cm, so that they can oversee the runway. These cameras are usually slightly curved, in order to ensure that water drains away. Placing the cameras at a slight height prevents a situation in which only a part of the runway is monitored. The cameras can be mounted either rigidly or such that they can rotate, for example through an angle of 90°. Each camera is connected to a picture processing unit 5, which contains at least a microprocessor and a memory.

Let us suppose now, as shown in Figure 1, that there is an object 4 lying on the runway. Let us further suppose that camera 3 is set up in the origin of an x-y co-ordinate system. In the same co-ordinate system the object 4 is then situated in the position x1, y1. The coordinates x1, y1 now have to be determined on the basis of the first and second picture taken by the first and second camera respectively. Camera 2 sees the object at an angle $\alpha 1$ and camera 3 sees it at an angle $\alpha 2$, situated in a plane parallel to the runway. The following trigonometric equations therefore apply :

$$\text{tg } \alpha 1 = \frac{x1+d}{y1} \qquad (1)$$

$$\text{tg } \alpha 2 = \frac{x1}{y1} \qquad (2)$$

substitution of (2) in (1) then gives :

$$y1 \text{ tg } \alpha 2 + d = y1 \text{ tg } \alpha 1$$

$$y1 (\text{tg } \alpha 1 - \text{tg } \alpha 2) = d$$

or

$$y1 = \frac{d}{(tg\alpha 1 - tg\alpha 2)} \qquad (3)$$

$$x1 = \frac{d.tg\alpha 2}{(tg\alpha 1 - tg\alpha 2)} \qquad (4)$$

Since now d (distance between first and second camera) is known, and $\alpha 1$ and $\alpha 2$ can be determined from the first and the second picture, the values of x1 and y1 can be determined from formulae (3) and (4).

It can now be ascertained from the value of y1 whether y1 $\leq$ b, b representing the width of the runway. If y1 > b, then the object will be clearly lying outside the runway, and the detected object does not constitute any further problem for air traffic. On the other hand, if y1 $\leq$ b, then the object is lying on the runway, and a further examination to establish the size of the object has to be made.

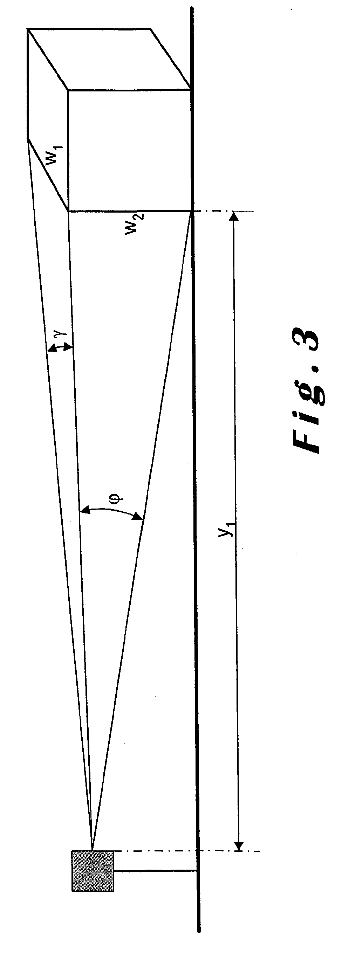

Figure 3 illustrates how, once it has been established that there is an object lying on the runway, the size of this object is determined. This size determination is performed by scanning within the first and/or second picture of the detected object. This scanning is achieved by, for example, scanning the contours of the object in the picture. In this case use is made of angles $\alpha$ and $\varphi$, which are looked at from the camera and are directed towards the object. Therefore, the angle $\delta$ is determined from the picture in a plane substantially parallel to the runway, and the angle $\varphi$ is determined in a plane substantially perpendicular to the plane of the runway.

$$\text{tg } \delta = \frac{w1}{y1} \text{ of } w1 = y1 \text{ tg } \delta$$

$$\text{tg } \varphi = \frac{w2}{y1} \text{ of } w2 = y1 \text{ tg } \varphi$$

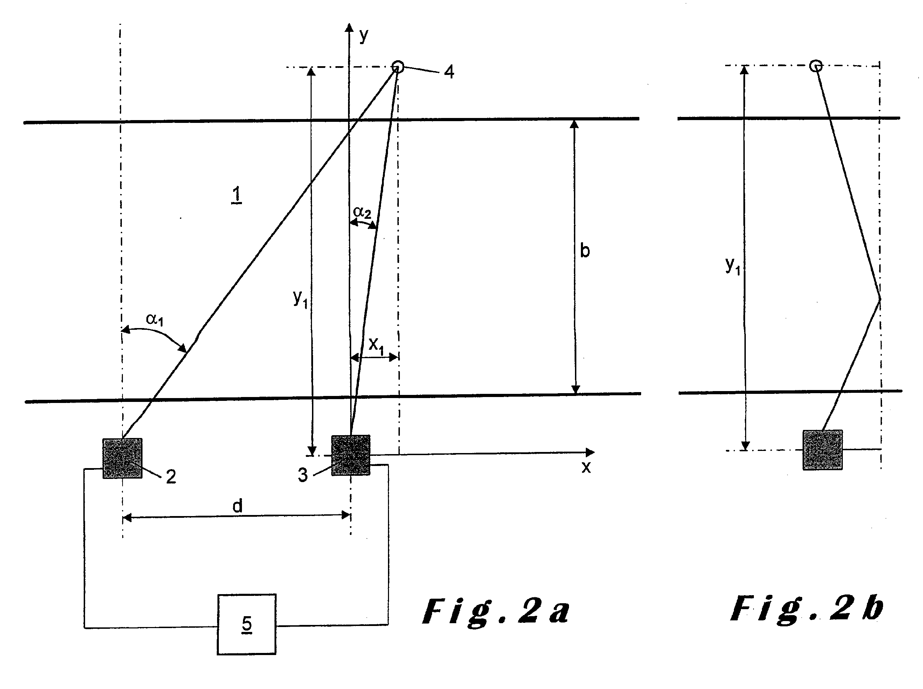

From the values of w1 and w2 it can then be determined whether the object does actually have a height and a width and is therefore a real object, or whether it is a shadow. The fact is that if w2 is small, that indicates a shadow or possibly a rubber mark. Figure 2 illustrates the instance of a shadow, in the case of which, although there appears to be an object present on the runway, it is in fact formed by a shadow of an object lying next to the runway. Such shadows can then be ignored, since they do not constitute any danger.

However, if the picture processing has established that w1 $\neq$ 0 and w2 $\neq$ 0, then this means there is actually an object present on the runway and that the alarm has to be raised. This is achieved by, for example, sending a message to the airport control tower and giving the position of the object.

## Claims

1. Method for determining the presence of an object on a runway, **characterised in that** it comprises the following steps :

   - recording of a first picture by at least a first camera set up on the edge of the runway;
   - recording of a second picture by at least a second camera set up on the same edge of the runway, the second camera being set up at a distance (d) from the first camera, in order to form a stereovision image between first and second camera;
   - ascertaining whether an object is recognisable in the first and second picture;
   - if an object is recognised, determining the distance between the object and a position along the edge by means of a first and second angle between the recognised object and the first and second camera respectively;
   - ascertaining, on the basis of the said distance, whether the recognised object is on the runway and determining the size of the object, if it is established that the detected object is on the runway, by scanning within one of the first or second pictures of the recognised object.

2. Method according to claim 1, **characterised in that** during said scanning the contours of the recognised object in the picture are scanned widthwise, on the one hand, and vertically, on the other hand.

3. Method according to claim 2, **characterised in that** during said scanning the angle viewed from one of the cameras and directed towards the object is determined in a plane substantially parallel to the runway, on the one hand, and in a plane substantially perpendicular to the runway, on the other hand.

4. Device for determining the presence of an object on a runway, **characterised in that** it comprises a first camera, which is provided for recording a first picture and can be set up on the edge of the runway, which device further comprises a second camera, which can be set up on the same edge of the runway and is provided for recording a second picture, it being possible to set up the second camera at a distance (d) from the first camera, in order to form a stereovision image between first and second camera, which device also comprises checking means, which are provided for ascertaining whether an object is recognisable in the first and second picture, and on recognition of an object is provided for determining the distance between the object and a position along the edge by means of a first and second angle between the recognised object and the first and second camera respectively, which checking means are further provided for ascertaining whether, on the basis of said distance, the recognised object is lying on the runway, and for determining the size of the recognised object if it is established that the recognised object is lying on the runway, by scanning within one of the first or second pictures of the recognised object.

*Fig. 1*

*Fig. 2 a*

*Fig. 2 b*

EP 1 363 140 A1

*Fig. 3*

EP 1 363 140 A1

**European Patent Office**

## EUROPEAN SEARCH REPORT

Application Number

EP 03 07 6482

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | JP 2001 145090 A (MITSUBISHI ELECTRIC CORP) 25 May 2001 (2001-05-25) * paragraphs '0001!, '0007!, '0008! * | 1,2,4 | G01V8/20 |
| X | EP 1 170 715 A (H A N D GMBH) 9 January 2002 (2002-01-09) * column 2, line 7 - line 54 * * column 7, line 16 - line 31 * * column 8, line 8 - line 18 * | 1,2 | |
| P,X | US 2002/109625 A1 (GOUVARY PHILIPPE) 15 August 2002 (2002-08-15) * paragraphs '0064!, '0073!, '0074! * | 1-4 | |
| A | US 4 989 084 A (WETZEL DONALD C) 29 January 1991 (1991-01-29) * column 2, line 12 - column 3, line 3 * | 1-4 | |
| A | US 5 268 698 A (RITCH HARRY D ET AL) 7 December 1993 (1993-12-07) | | |

**TECHNICAL FIELDS SEARCHED (Int.Cl.7)**

G01V
G08G

The present search report has been drawn up for all claims

| Place of search | Date of completion of the search | Examiner |
|---|---|---|
| The Hague | 29 August 2003 | Swartjes, H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 03 07 6482

This annex lists the patent family members relating to the patent documents cited in the above-mentioned European search report.
The members are as contained in the European Patent Office EDP file on
The European Patent Office is in no way liable for these particulars which are merely given for the purpose of information.

29-08-2003

| Patent document cited in search report | | Publication date | Patent family member(s) | | Publication date |
|---|---|---|---|---|---|
| JP 2001145090 | A | 25-05-2001 | NONE | | |
| EP 1170715 | A | 09-01-2002 | DE<br>EP | 10032433 A1<br>1170715 A2 | 17-01-2002<br>09-01-2002 |
| US 2002109625 | A1 | 15-08-2002 | FR | 2820867 A1 | 16-08-2002 |
| US 4989084 | A | 29-01-1991 | CA | 2023747 A1 | 25-05-1991 |
| US 5268698 | A | 07-12-1993 | NONE | | |

EPO FORM P0459

For more details about this annex : see Official Journal of the European Patent Office, No. 12/82